# EUROPEAN PATENT APPLICATION

(11) **EP 2 048 448 A1**
(43) Date of publication of application: **15.04.2009**
(21) Application number: 07805882.3
(22) Date of filing: 30.07.2007
(51) Int. Cl.: F24F 6/00, B05B 5/057, F24F 6/14

(54) **HUMIDIFICATION SYSTEM**

(30) Priority: 01.08.2006 JP 2006210247
(71) Applicant: Daikin Industries, Ltd., Osaka 530-8323 (JP)
(72) Inventor: OBATA, Kouei, Sakai-shi Osaka 591-8511 (JP); OKUMOTO, Mamoru, Sakai-shi Osaka 591-8511 (JP)
(74) Representative: Goddar, Heinz J.
(86) International application number: PCT/JP2007/064858
(87) International publication number: WO 2008/015994

(57) **Abstract**

This invention relates to a humidification system for delivering atomized water to an object. In a humidification system of the invention for delivering humidified air to an objet, the object is efficiently humidified. A humidification system (1) of the invention is provided with an electrostatic spraying device (2) for discharging water in an electrically charged and atomized state. When electrically charged water droplets discharged from the electrostatic spraying device (2) approach a person (P), these water droplets are attracted to the person (P) by electric image force. In this way, the water in atomized form is efficiently absorbed by or adhered to the object (P).

## Description

### TECHNICAL FIELD

This invention relates generally to humidification systems for delivering atomized water to an object.

### BACKGROUND ART

Humidification systems of the type that deliver atomized water to an object, such as a person, have been known in the art.

A humidification system disclosed in Patent Document 1 produces a humidified swirling airflow by blasting a spirally swirling flow of air to a liquid in atomized droplet form and, in addition, disperses the humidified swirling airflow widely by blasting a separate airflow to the humidified swirling airflow from an oblique forward direction. As a result, the humidification system increases range of the dispersal of humidified air.
Patent Document: JP-A-2000-213782

### DISCLOSURE OF THE INVENTION

### PROBLEMS THAT THE INVENTION INTENDS TO OVERCOME

Incidentally, if a flow of humidified air containing water in atomized form travels to near an object such as a person and then hits the object, the humidified air will flow along closely over the surface of the object. As a result, most of the atomized water contained in the humidified air flows along closely over the object without being adhered to nor being absorbed by the object.

Consequently, although, as in the humidification system according to Patent Document 1, the dispersal range of humidified air is expanded to thereby deliver much humidified air to around the object, the amount of moisture that adheres to or be absorbed by the object will not increase as expected. As a result, the humidification system fails to efficiently deliver atomized water to the object.

In light of the above drawback, the present invention was made. Accordingly, a general object of the invention is to efficiently deliver atomized water to an object.

### MEANS FOR OVERCOMING THE PROBLEMS

In the present invention, a potential difference is produced between water in atomized form and an object (P), whereby the atomized water is efficiently absorbed by or adhered to the obj ect (P) by electric force.

The invention provides a first aspect that is directed to a humidification system (1) for delivering atomized water to an object (P). And the humidification system (1) includes an electrically charging and atomizing means (2, 2A, 2B, 2C, 2D) for discharging water in an atomized and electrically charged state.

With the arrangement of the first aspect, water in atomized form (i.e., fine water droplets) and in an electrically charged state is discharged from the electrically charging and atomizing means (2, 2A, 2B, 2C, 2D). Here, if the object (P) is electrically charged opposite, in potential, to the water droplets, then the water droplets, when they approach the object (P), are attracted to the object (P) by coulomb force. As a result, the water droplets are efficiently adsorbed by or adhered to the object (P). In addition, if the object (P) is not electrically charged but has some electric capacitance, the water droplets are attracted to the object (P) by electric image force (which is an electrostatic force that acts between the water droplets and the object (P) because of the induction of electric charge of opposite potential to that of the water droplets to the object (P) by an electric field generated by the electric charge of the water droplets). As a result, the water droplets are efficiently absorbed by or adhered to the object (P).

In the way as described above, water is emitted in an atomized and electrically charged state from the electrically charging and atomizing means (2, 2A, 2B, 2C, 2D), whereby, not only when the object (P) is electrically charged but also when the object (P) is not electrically charged, the atomized water is efficiently adsorbed by or adhered to the object (P).

In addition, the electrically charging and atomizing means (2, 2A, 2B, 2C, 2D) may be configured such that either water is first atomized and then electrically charged; water is first electrically charged and then atomized; or water is atomized while simultaneously being electrically charged, in other words, it does not matter at all in which order these steps of electric charging and atomization are conducted.

The invention provides, as a second aspect according to the first aspect, a humidification system. The humidification system of the second aspect is characterized in that it further includes an object grounding means (203) for establishing connection of the object (P) to ground.

With the arrangement of the second aspect, the object (P) is connected to ground (earth) by the object grounding means (203), so that if electrically charged water droplets approach the object (P), it is ensured that electric charges of opposite potential to the water droplets are induced to the object (P). As a result, it is ensured that the water droplets are attracted to the object (P) by electric image force. In the way as described above, the water discharged in atomized form from the electrically charging and atomizing means (2, 2A, 2B, 2C, 2D) is more efficiently adsorbed by or adhered to the object (P).

The invention provides, as a third aspect according to the first aspect, a humidification system. The humidification system of the third aspect is characterized in that the humidification system further includes an object electrically charging means (303) for electrically charging the object (P) to a potential opposite to that of the water electrically charged by the electrically charging and atomizing means (2, 2A, 2B, 2C, 2D).

With the arrangement of the third aspect, the object (P) is electrically charged by the object electrically charging means (303) so that it has a potential opposite to that of the water droplets electrically charged by the electrically charging and atomizing means (2, 2A, 2B, 2C, 2D). As a result, when the electrically charged water droplets approach the object (P) electrically charged to a potential opposite to that of the water, the water droplets are attracted to the object (P) by coulomb force. In the way as described above, the water discharged in atomized form from the electrically charging and atomizing means (2, 2A, 2B, 2C, 2D) is more efficiently absorbed by or adhered to the object (P).

The present invention provides, as a fourth aspect according to any one of the first to third aspects, a humidification system. The humidification system of the fourth aspect is characterized in that the electrically charging and atomizing means (2) is an electrostatic spraying means (2, 2D) which includes (a) a water discharging part (51, 420) having a discharging opening (51a) through which water is discharged and (b) an electric field generating means (22, 50, 60, 420, 425) for generating an electric field in the vicinity of the discharging opening (51a), wherein such an electric field is made to act on water in the vicinity of the discharging opening (51a), whereby the water is electrically charged and atomized.

With the arrangement of the fourth aspect, the electrically charging and atomizing means (2, 2D) discharges electrically charged, fine water droplets by means of so-called electrostatic atomization. In such electrostatic atomization, water present at the discharging opening (51a) of the water discharging part (51, 420) is atomized by coulomb force, thereby making it possible to electrically charge the water while simultaneously atomizing it. As a result, it becomes possible to provide a simplified configuration for the electrically charging and atomizing means (2), thereby making it possible to reduce the number of component parts required.

The invention provides, as a fifth aspect according to any one of the first to third aspects, a humidification system. The humidification system of the fifth aspect is characterized in that the electrically charging and atomizing means (2A, 2B, 2C) includes an atomizing means (7A, 8, 10) for atomizing water and an electrically charging means (7B, 9) for electrically charging water.

With the arrangement of the fifth aspect, the electrically charging and atomizing means (2A, 2B, 2C) is made up of the atomizing means (7A, 8, 10) and the electrically charging means (7B, 9). As a result of such arrangement, the electrically charging and atomizing means (2A, 2B, 2C) can be designed being specialized in atomization and in electric charging, thereby allowing more design freedom.

The invention provides, as a sixth aspect according to the fifth aspect, a humidification system. The humidification system of the sixth aspect is characterized in that the electrically charging means (9) uses corona discharge to electrically charge water atomized by the atomizing means (8, 10).

With the arrangement of the sixth aspect, the electrically charging means (9) that makes use of corona discharge is incorporated in the atomizing means (8,10), whereby the electrically charging and atomizing means (2A, 2B, 2C) can be realized easily.

The invention provides, as a seventh aspect according to the fifth aspect, a humidification system. The humidification system of the seventh aspect is characterized in that the electrically charging means (7B) applies an electric field to water to thereby polarize the water, and that the atomizing means (7A) atomizes the water polarized by the electrically charging means (7B).

With the arrangement of the seventh aspect, water is polarized and then atomized. This makes it possible to discharge water in an electrically charged and atomized state. Therefore, the electrically charging and atomizing means (2A, 2B, 2C) is easily realized, even when compared to the aforesaid arrangement that makes use of corona discharge.

The invention provides, as an eighth aspect according to the first aspect, a humidification system. The humidification system of the eighth aspect is characterized in that the object (P) is a person.

With the arrangement of the eighth aspect, a person, generally has some electric capacity, so that, if electrically discharged water droplets approach the person, electric charges having a potential opposite to that of the water droplets are surely induced to the person and the water droplets are attracted to the person by electric image force. That is, if the object (P) is a person, water discharged in atomized form from the electrically charging and atomizing means (2, 2A, 2B, 2C, 2D) is efficiently absorbed by or adhered to the person without having to actively bring the person into contact with ground or to electrically charge the person to a potential opposite to that of the water droplets in the way as described above.

### ADVANTAGEOUS EFFECTS OF THE INVENTION

In accordance with the present invention, electrically charged, minute water droplets are discharged from the electrically charging and atomizing means (2, 2A, 2B, 2C, 2D), whereby the discharged water droplets are efficiently absorbed by or adhered to the object (P). As a result, the water in atomized form is efficiently delivered to the object (P), whereby the amount of electric power that is consumed by the humidification system (1) can be reduced.

In accordance with the second aspect of the invention, the object (P) is connected to ground by the object grounding means (203), whereby electrically charged water droplets are efficiently absorbed by or adhered to the object (P) by electric image force.

In accordance with the third aspect of the invention, the object (P) is electrically charged to a potential opposite to that of the electrically charged water droplets by the object electrically charging means (303), whereby the electrically charged water droplets are more efficiently absorbed by or adhered to the object (P) with the aid of coulomb force. In addition, as compared to the arrangement in which water droplets are adsorbed by or adhered to the object (P) by electric image force, the water in atomized form is more efficiently given to the object (P) because of the use of coulomb force that is relatively stronger than electric image force.

In accordance with the fourth aspect of the invention, the electrostatic spraying means is employed as the electrically charging and atomizing means (2, 2D). As a result of such arrangement, water is electrically charged and atomized at the same time, and the configuration of the electrically charging and atomizing means (2, 2D) can be simplified.

In accordance with the fifth aspect of the invention, the electrically charging and atomizing means (2A, 2B, 2C) is composed of the atomizing means (7A, 8, 10) and the electrically charging means (7B, 9), thereby providing more design freedom of the electrically charging and atomizing means (2A, 2B, 2C), and the performance of atomization and the performance of electric charging can be enhanced separately.

In accordance with the sixth aspect of the invention, the electrically charging means (9) that makes use of corona discharge is incorporated in the atomizing means (8, 10), whereby the electrically charging and atomizing means (2A, 2B, 2C) can be realized easily.

In accordance with the seventh aspect of the invention, water is polarized and then atomized, whereby it becomes possible that water is discharged in an electrically charged and atomized state. Therefore, the electrically charging and atomizing means (2A, 2B, 2C) is easily realized, even when compared to the aforesaid configuration that makes use of corona discharge.

In accordance with the eighth aspect of the invention, since the object is a person, water can efficiently be delivered to the person by electric image force without having to actively bring the person into contact with ground or charged as described above.

### BRIEF DESCRIPTION OF THE DRAWINGS

FIG. 1 is a schematic illustrating a humidification system according to a first embodiment of the invention.
FIG. 2 is a schematic configuration diagram of an electrostatic spraying device.
FIG. 3 is a perspective view of a spray cartridge.
FIG. 4 is a cross-sectional view showing a main part of the spray cartridge.
FIG. 5 is a schematic front view of the main part of the cartridge showing the positional relationship between a spraying nozzle and a rod-shaped electrode.
FIG. 6, which is comprised of FIG. 6(A) and FIG. 6(B), is a cross-sectional view showing the tip end of the spraying nozzle wherein FIG. 6(A) shows the spraying nozzle during spray and FIG. 6(B) shows the spraying nozzle when it stops spraying.
FIG. 7 is an explanatory diagram showing how water droplets are attracted to an object.
FIG. 8 is a schematic illustrating a humidification system according to a second embodiment of the invention.
FIG. 9 is an explanatory diagram showing how water droplets are attracted to an object.
FIG. 10 is a schematic illustrating a humidification system according to a third embodiment of the invention.
FIG. 11 is an explanatory diagram showing how water droplets are attracted to an object.
FIG. 12 is a schematic illustrating an electrically charging and atomizing device according to a first modification.
FIG. 13 is a schematic illustrating an electrically charging and atomizing device according to a second modification.
FIG. 14 is a schematic illustrating an electrically charging and atomizing device according to a third modification.
FIG. 15 is a schematic illustrating a humidification system according to a fourth modification.
FIG. 16 is a schematic illustrating an electrically charging and atomizing device according to the fourth modification.

### REFERENCE NUMERALS IN THE DRAWINGS

P: person (object)
1, 201, 301: humidification system
2, 2A, 2B, 2C, 2D: electrostatic spraying device (electrically charging and atomizing means)
22: electric power supply (electric field generating means)
3: electrically conductive desk (object grounding means)
50: nozzle unit (electric field generating means)
51: spraying nozzle (water supplying part)
60: electrode holder (electric field generating means)
7A: ultrasonic atomizing part (atomizing means)
7B: polarizing part (electrically charging means)
8: centrifugal spraying part (atomizing means)
9: corona discharging part (electrically charging means)
10: spray type atomizing part (atomizing means)
203: electrically charging desk (object electrically charging means)
420: spraying nozzle (water discharging part, electric field generating means)
425: electric power supply part (electric field generating means)

### BEST MODE FOR CARRYING OUT THE INVENTION

In the following, embodiments of the present invention will be described in detail with reference to the accompanying drawings.

### FIRST EMBODIMENT OF THE INVENTION

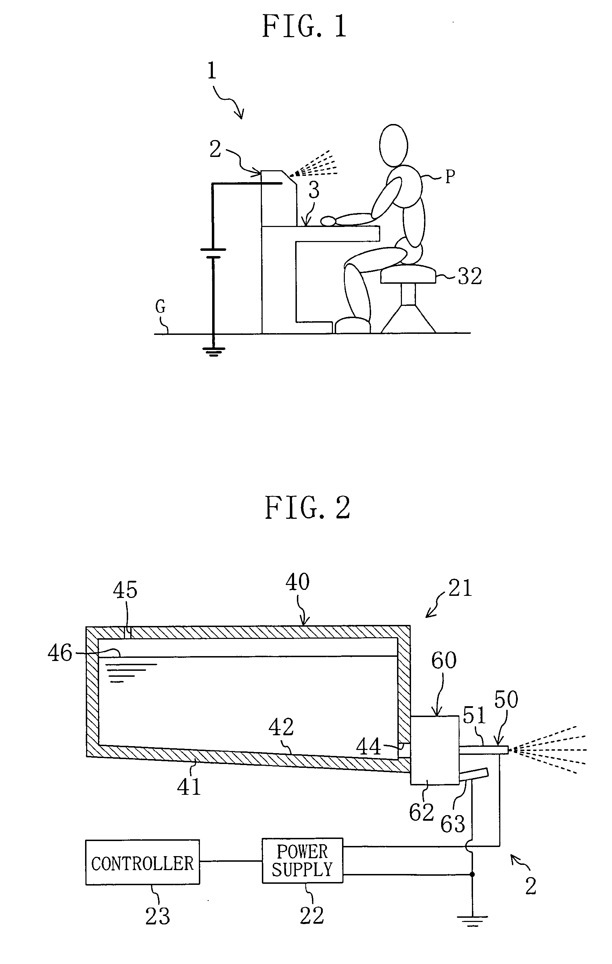

Referring first to FIG. 1, there is shown a humidification system (1) according to a first embodiment of the invention. The humidification system (1) is provided with an electrostatic spraying device (2) configured to discharge water in an electrically charged and atomized state.

As shown in FIG. 2, the electrostatic spraying device (2) is provided with a spray cartridge (21), an electric power supply (22) and a controller (23). The electrostatic spraying device (2) is mounted on a desk (3) so that it provides the supply of water in atomized form to a person (P) who uses the desk (3). The electrostatic spraying device (2) constitutes an electrically charging and atomizing means.

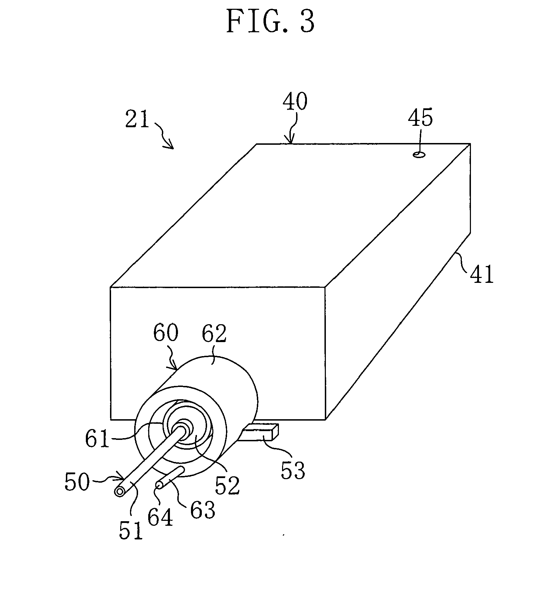

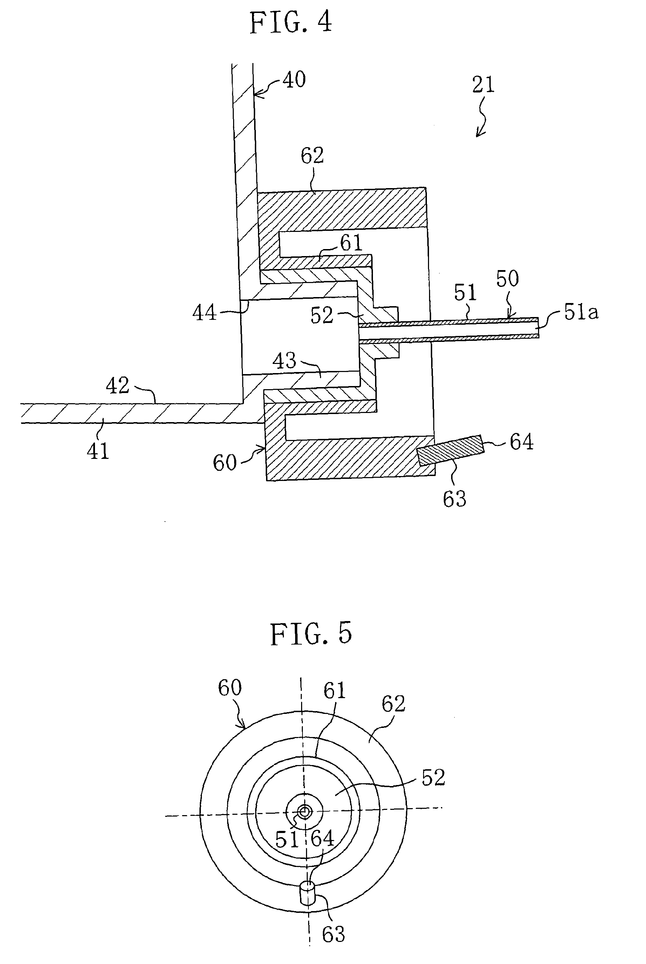

As shown in FIGS. 3 and 4, the spray cartridge (21) includes a solution tank (40), a nozzle unit (50), an electrode holder (60) and a rod-shaped electrode (63).

The solution tank (40) has a tank body (41). The tank body (41) is a hollow container which is shaped like a somewhat flat rectangular parallelepiped. The tank body (41) is provided, in its top plate, with an air vent port (45). A bottom end surface (42) of the tank body (41) constitutes an inclined surface which slopes from the rear of the tank body (41) (i.e., the left-hand side in FIG.2 or the far side in FIG. 3) towards the front of the tank body (41) (i.e., the right-hand side in FIG.2 or the near side in FIG. 3). In the tank body (41), the front side is deeper than the rear side. In addition, the sides of the tank body (41) are approximately vertical surfaces.

The tank body (41) is provided, at the front thereof, with a pipe part (43). The pipe part (43) is shaped like a relatively short circular pipe and projects substantially in a horizontal direction from the front of the tank body (41). In the front of the tank body (41), the pipe part (43) is arranged at a lower portion of the front and substantially in the middle relative to the width direction of the front. In addition, the tank body (41) is provided, in a wall forming the front thereof, with a through hole (44). The internal space of the tank body (41) and the pipe part (43) are in fluid communication with each other through the through hole (44). The lower end of the through hole (44) is situated slightly above the bottom end surface (42) of the tank body (41) (see FIG. 2).

As shown in FIGS. 3 and 4, the nozzle unit (50) includes a spraying nozzle (51) and a nozzle holder (52).

The spraying nozzle (51) is formed by a circular pipe of stainless steel. On the other hand, the nozzle holder (52) is shaped like a circular cylindrical, bottomed cap. The nozzle holder (52) has an inside diameter substantially equal to the outside diameter of the pipe part (43) and is capped on the pipe part (43). That is, the pipe part (43) of the solution tank (40) is inserted into the nozzle holder (52). In the nozzle holder (52), as shown in FIG. 5, the base end part of the spraying nozzle (51) is inserted into the middle of the bottom part thereof, i.e., the near side end part in FIG. 3. The base end part of the spraying nozzle (51) is passed completely through the bottom part of the nozzle holder (52). With the nozzle unit (50) mounted to the solution tank (40), the spraying nozzle (51) projects, substantially in a horizontal direction, from the front of the tank body (41) and is in fluid communication with the internal space of the tank body (41) through the pipe part (43) and the through hole (44). The spraying nozzle (51) constitutes a water discharging part and has a tip end opening (51a) that constitutes a discharging opening.

The nozzle holder (52) has a terminal part (53). The terminal part (53) projects from the outer circumferential surface of the nozzle holder (52) and is arranged on the opening end side, i.e., the far side in FIG. 3, of the nozzle holder (52). The nozzle holder (52) including the terminal part (53) is entirely formed of electrically conductive resin. And the spraying nozzle (51) inserted in the bottom of the nozzle holder (52) is electrically connected to the nozzle holder (52) and constitutes a first electrode.

The electrode holder (60) has an inner cylindrical part (61) and an outer cylindrical part (62). The inner and outer cylindrical parts (61, 62) are each shaped like a circular cylinder. The inside diameter of the outer cylindrical part (62) is greater than the outside diameter of the inner cylindrical part (61). The inner and outer cylindrical parts (61, 62) are arranged coaxially with each other and are integrally coupled together at their base end sides. The inside diameter of the inner cylindrical part (61) is substantially equal to the outside diameter of the nozzle holder (52). The electrode holder (60) engages, at the inner cylindrical part (61), with the nozzle holder (52) in a position at which the base end sides of the inner and outer cylindrical parts (61, 62) are directed towards the tank body (41) of the solution tank (40), whereby the electrode holder (60) is mounted to the nozzle holder (52). The electrode holder (60) is entirely formed of non-electrically conductive resin.

The rod-shaped electrode (63) is a member which is shaped like a rod having a circular cross section and constitutes a second electrode. The rod-shaped electrode (63) is formed of electrically conductive material such as metal. The rod-shaped electrode (63) is formed such that it projects from the tip end surface, i.e., the right-hand end surface in FIGS. 2 and 4, of the outer cylindrical part (62) of the electrode holder (60). The tip end portion of the rod-shaped electrode (63) projecting from the outer cylindrical part (62) constitutes a tip end part (64). The tip end part (64) of the rod-shaped electrode (63) is situated at a retracted position away from the tip end of the spraying nozzle (51) toward the solution tank (40). In addition, the tip end part (64) of the rod-shaped electrode (63) lies lateral to the spraying nozzle (51). The rod-shaped electrode (63) is electrically connected to the negative terminal of the electric power supply (22). As described above, the material used to form the electrode holder (60) is non-electrically conductive resin. Accordingly, the rod-shaped electrode (63) is electrically isolated from the spraying nozzle (51).

In addition, the aforesaid materials used to form the spraying nozzle (51) and the rod-shaped electrode (63) are merely exemplary. That is, the spraying nozzle (51) may be formed using electrically conductive materials other than stainless steel (for example, electrically conductive resins). In addition, the rod-shaped electrode (63) may be formed using electrically conductive materials other than electrically conductive resin (for example, metal).

The tank body (41) of the solution tank (40) holds water for use as a spray liquid. The position of a liquid level (46) in the tank body (41) is higher than that of the tip end of the spraying nozzle (51) extending in a horizontal direction from the lower part of the tank body (41). Therefore, there is a head difference between the liquid level (46) in the tank body (41) and the tip end of the spraying nozzle (51) and the supply of water from the tank body (41) to the tip end of the spraying nozzle (51) is accomplished by the head difference.

In the spray cartridge (21), the spray liquid is discharged in the form of droplets from the tip end of the spraying nozzle (51). Consequently, if the spraying nozzle (51) is not refilled with additional spray liquid, the amount of spray liquid in the spraying nozzle (51) decreases and, as a result, it becomes impossible for the spraying nozzle (51) to continue spraying. In the spray cartridge (21), however, the tip end of the spraying nozzle (51) is positioned at a level lower than the liquid level (46) in the solution tank (40), in other words, there is a head difference between the liquid level (46) in the solution tank (40) and the tip end of the spraying nozzle (51). Accordingly, the head difference causes spray liquid in the solution tank (40) to be provided to the spraying nozzle (51), thereby enabling the spraying nozzle (51) to continue spraying. That is, the electrostatic spraying device (2) of the present embodiment requires no member such as a pump for the supply of spray liquid from the solution tank (40) to the spraying nozzle (51).

The electric power supply (22) is a dc high voltage electric power supply. The positive terminal of the electric power supply (22) is electrically connected through the terminal part (53) of the nozzle holder (52) to the spraying nozzle (51) and the negative terminal thereof is electrically connected to the rod-shaped electrode (63). In addition, the negative terminal of the electric power supply (22) is connected to ground (earth). Upon the turning on of the electric power supply (22), a voltage of about 6 kV is applied to the spraying nozzle (51). The electric power supply (22), the nozzle unit (50) and the electrode holder (60) together constitute an electric field generating means. FIG. 2 omits diagrammatic representation of the terminal part (53) of the nozzle holder (52) and, for descriptive purposes, the electric power supply (22) is shown to be in connection with the spraying nozzle (51).

The controller (23) is for the switching of the electric power supply (22) and constitutes a controlling means. More specifically, the controller (23) is configured such that the electric power supply (22) is alternately turned on and off. In addition, the controller (23) is configured such that the ratio of the length of time for which the electric power supply (22) is turned on (the ON time) and the length of time for which the electric power supply (22) is turned off (the OFF time), i.e., the duty ratio, is adjusted in response to the the height of the liquid level (46) in the solution tank (40).

### OPERATION

The operation of the humidification system (1) will be described.

The electrostatic spraying device (2) performs a so-called cone jet mode of EHD spray.

As described above, in the spray cartridge (21), the liquid level (46) in the solution tank (40) overlies the tip end of the spraying nozzle (51), which is the state in which there is a head difference between the liquid level (46) in the solution tank (40) and the tip end of the spraying nozzle (51). This results in the application of a liquid pressure due to the head difference to a gas-liquid interface (47) which is formed in a tip end opening (51a) of the spraying nozzle (51).

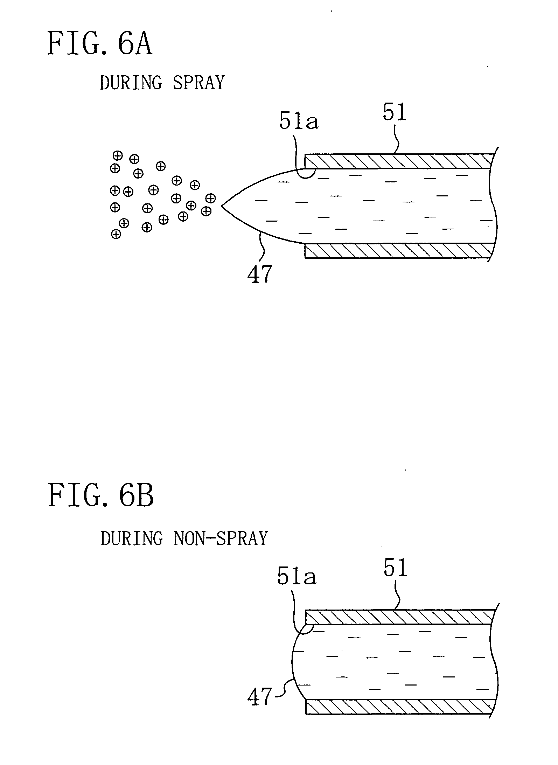

In the state in which the electric power supply (22) is turned off (i.e., when the spraying nozzle (51) and the rod-shaped electrode (63) are at the same potential), there is a balance between the surface tension and the liquid pressure due to the head difference in the gas-liquid interface (47) formed in the tip end opening (51a) of the spraying nozzle (51), as shown in FIG. 6(B). Consequently, even in the state in which the electric power supply (22) is placed in the off state, no spray liquid will flow out from the tip end opening (51a) of the spraying nozzle (51).

On the other hand, in the state in which the electric power supply (22) is turned on (i.e., when there is established between the spraying nozzle (51) and the rod-shaped electrode (63) a potential difference), an electric field is generated in the vicinity of the tip end opening (51a) of the spraying nozzle (51). In addition, the spray liquid in the spraying nozzle (51) becomes polarized and positive (+) electric charges gather in the vicinity of the gas-liquid interface (47) formed in the tip end opening (51a) of the spraying nozzle (51). And, a coulomb force acts on spray liquid present in the tip end opening (51a) of the spraying nozzle (51), as a result of which the spray liquid is pulled out from the spraying nozzle (51). Consequently, in the tip end of the spraying nozzle (51), the gas-liquid interface (47) is drawn out in the shape of a circular cone, and part of the spray liquid is torn apart from the top of the circular cone-shaped gas-liquid interface (47) and changes to water droplets, as shown in FIG. 6(A).

Fine water droplets are discharged from the tip end opening (51a) of the spraying nozzle (51) and these water droplets are supplied into the room air. The water droplets are electrically positively charged.

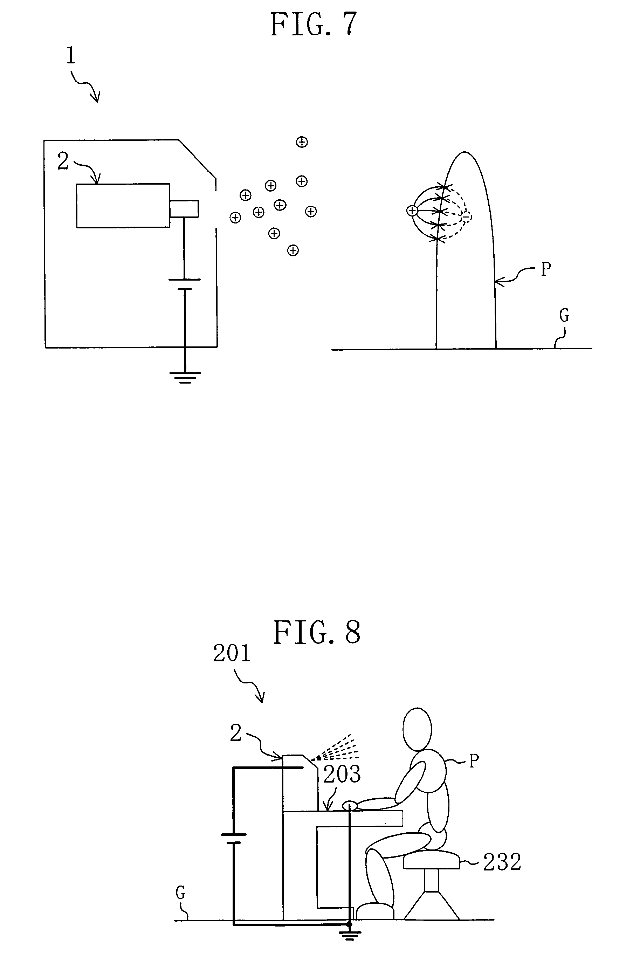

And when the water droplets, electrically positively charged, are dispersed to the person (P), negative electric charges are induced on the surface of the person (P) and an electric image force is generated between the water droplets and the person (P), as shown in FIG. 7. As a result, the water droplets are attracted to the person (P) and either adhere to the person (P) or are absorbed by the person (P) through the person's mouth and nose. Since the person (P) has some electric capacitance, this means that the person (P) keeps generating electric image force as far as that electric capacitance permits. As a result, water droplets dispersed and approaching the person (P) continue to efficiently be adhered to or absorbed by the person (P). In addition, although electric charges will be accumulated in the person (P) by an amount proportional to the amount of electrically charged water droplets, the accumulated electric charges in the person (P) are discharged when the person (P) is being in contact with an object connected to ground during the time when the person (P) is using the humidification system (1) or, if not, when the person (P) moves and happens to come into contact with an object connected to ground. As described above, the person (P) has some degree of electric capacitance and has many occasions to get rid of accumulated electric charges therefrom, whereby the person (P) is able to keep generating electric image force. This makes it possible for electrically charged water droplets to continuously efficiently be adhered to or absorbed by the person (P).

### ADVANTAGEOUS EFFECTS OF THE FIRST EMBODIMENT

Therefore, in accordance with the first embodiment, the water held in the solution tank (40) is discharged in an electrically charged and atomized state from the electrostatic spraying device (2). These electrically charged water droplets are absorbed by or adhered to the person (P) by the action of electric image force. As a result, the amount of water droplets that is supplied to the object (P) can be increased relative to the amount of water droplets that is discharged from the electrostatic spraying device (2), whereby the amount of electric power that is consumed by the humidification system (1) can be reduced.

In addition, since the placing of the object (P) in contact with ground or the electric charging of the object (P) (as required in the following second and third embodiments) is not necessary because the object (P) is a person, the humidification system can be simplified in configuration and improved in general versatility.

In addition, in the first embodiment, the water droplets discharged from the electrostatic spraying device (2) are electrically positively charged. However, it may be configured such that the water droplets are electrically negatively charged.

### SECOND EMBODIMENT OF THE INVENTION

Next, the following is a description of a humidification system (201) according to a second embodiment of the invention. The humidification system (201) of the second embodiment differs from the first embodiment in that the object, such as a person, is brought into contact with ground. As to structural features of the second embodiment corresponding to those of the first embodiment, the same reference numerals will be used and their description is omitted here.

Referring to FIG. 8, there is shown the humidification system (201) according to the second embodiment which system includes an electrostatic spraying device (2) and an electrically conductive desk (203) through which a person (P) as an object is connected to ground (earth).

The electrically conductive desk (203) is provided, on its top plate, with an electrically conductive mat (not shown) which is connected to ground (G). That is, when the person (P) is in contact with the electrically conductive mat placed on the electrically conductive desk (203), the person (P) is automatically connected to ground. The electrically conductive desk (203) constitutes an object grounding means. FIG. 8 omits diagrammatic representation of the electrically conductive mat, its terminals and so on, and provides diagrammatic representation that the electrically conductive desk (203) is shown to be connected to the ground (G) for descriptive purposes.

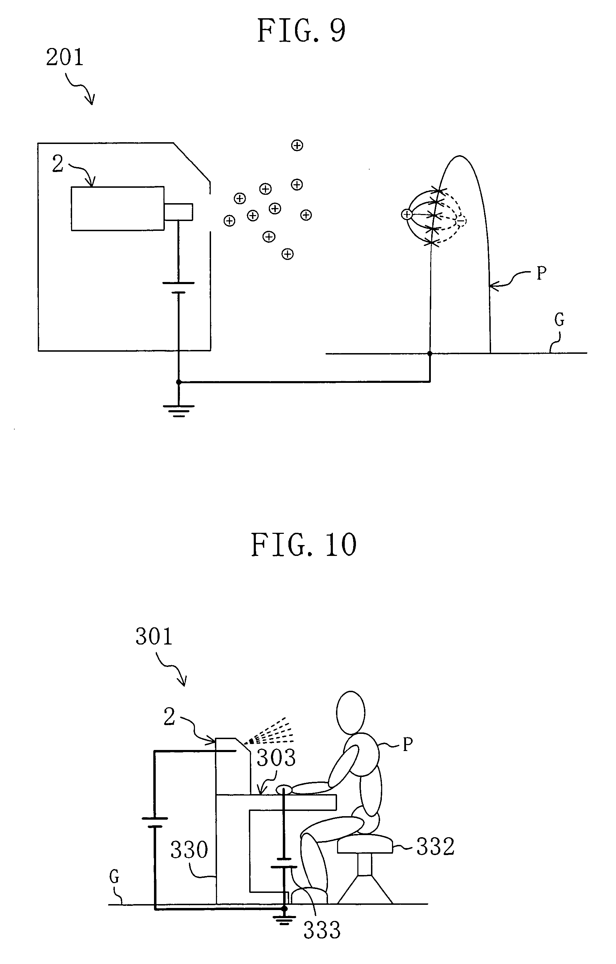

And now, the person (P) who is using the electrically conductive desk (203) is placed in connection to ground when the person (P) is in contact with the electrically conductive mat placed on the electrically conductive desk (203). If, in this condition, electrically positively charged water droplets are dispersed to the person (P), then negative electric charges are induced on the surface of the person (P), whereby electric image force is generated between the water droplets and the person (P), as shown in FIG. 9. As a result, the water droplets are attracted to the person (P) and either adhere to the person (P) or are absorbed by the person (P) through the person's mouth and nose. In the way as described above, the water droplets dispersed and approaching the person (P) are efficiently adhered to or absorbed by the person (P). In the second embodiment, since the person (P) is connected through the electrically conductive desk (203) to ground, this enables the person (P) to keep generating electric image force.

### ADVANTAGEOUS EFFECTS OF THE SECOND EMBODIMENT

Therefore, in accordance with the second embodiment, the water held in the solution tank (40) is discharged in an electrically charged and atomized state from the electrostatic spraying device (2) and, in addition, the person (P) is connected through the electrically conductive desk (203) to ground, whereby the electrically charged water droplets can be absorbed by or adhered to the person (P) by the action of electric image force. As a result, the amount of water droplets that is supplied to the object (P) can be increased relative to the amount of water droplets that is discharged from the electrostatic spraying device (2), whereby the amount of electric power that is consumed by the humidification system (201) can be reduced.

In addition, in the humidification system (201), the object (P), such as a person, is connected through the electrically conductive desk (203) to ground. As a result of such arrangement, the electric charges accumulated in the object (P) will not become saturated; the continuous generation of electric image force can be accomplished; and water droplets are efficiently absorbed by or adhered to the object (P).

Furthermore, in the humidification system (201), the efficiency to deliver electrically charged water droplets to the object (P) is improved by brining the object (P), such as a person, into connection with ground. As a result of such arrangement, the electric charging of the object as required in the following third embodiment becomes unnecessary and it suffices if the object (P) is connected to ground. This allows the humidification system (201) to easily be used in an existing space such as an office space. That is, the humidification system (201) is configured such that the object (P) is connected through the electrically conductive desk (203) to ground, thereby making it possible to enhance the general versatility of the humidification system (201).

In addition, in the foregoing embodiment, the electrically conductive desk (203) constitutes an object grounding means, which should, however, not be considered limitative. For example, the electrically conductive chair (232) may be an electrically conductive chair which is composed of conductive vinyl leather, electrically conductive canisters and so on. In addition, it may be configured such that the person (P) as an object wears an electrostatic strap which is connected to ground so that the person (P) is grounded. Furthermore, it may be arranged such that the person (P) as an object wears electrostatic clothes and electrostatic shoes and an electrostatic mat is placed on the floor surface so that the person (P) is grounded. Further, it may be arranged such that a mouse and a keyboard are connected to ground (G). That is, any grounding means can be employed as long as it can bring the object (P), such as a person, into connection with ground.

### THIRD EMBODIMENT OF THE INVENTION

Next, the following is a description of a humidification system (301) according to a third embodiment of the invention. The humidification system (301) of the third embodiment differs from the first embodiment in that the object, such as a person, is electrically charged. As to structural features of the second embodiment corresponding to those of the first embodiment, the same reference numerals will be used and their description is omitted here.

The humidification system (301) of the third embodiment has an electrically charging and atomizing device that includes an electrostatic spraying device (2) and an electrically charging desk (303) for electrically charging a person as an object, as shown in FIG. 10.

The electrostatic spraying device (2) of the third embodiment has the same configuration as the electrostatic spraying device (2) of the first embodiment.

The electrically charging desk (303) has a desk body member (330) and an electric power supply (333). The negative terminal of the electric power supply (333) is electrically connected to the desk body member (330) while the positive terminal of the electric power supply (333) is connected to ground and a negative voltage of predetermined level is applied to the desk body member (330). In this way, the desk body member (330) is electrically negatively charged such that it has a potential opposite to that of water droplets supplied from the electrostatic spraying device (2). As a result of such arrangement, the person (P) who is using the electrically charging desk (303) will be electrically negatively charged when in contact with the desk body member (330). The electrically charging desk (303) constitutes an object electrically charging means. The level of voltage that is applied to the desk body member (330) is set such the person (P) feels no pain.

### OPERATION

The operation of the humidification system (301) provided with the electrically charging desk (303) as configured above will be described.

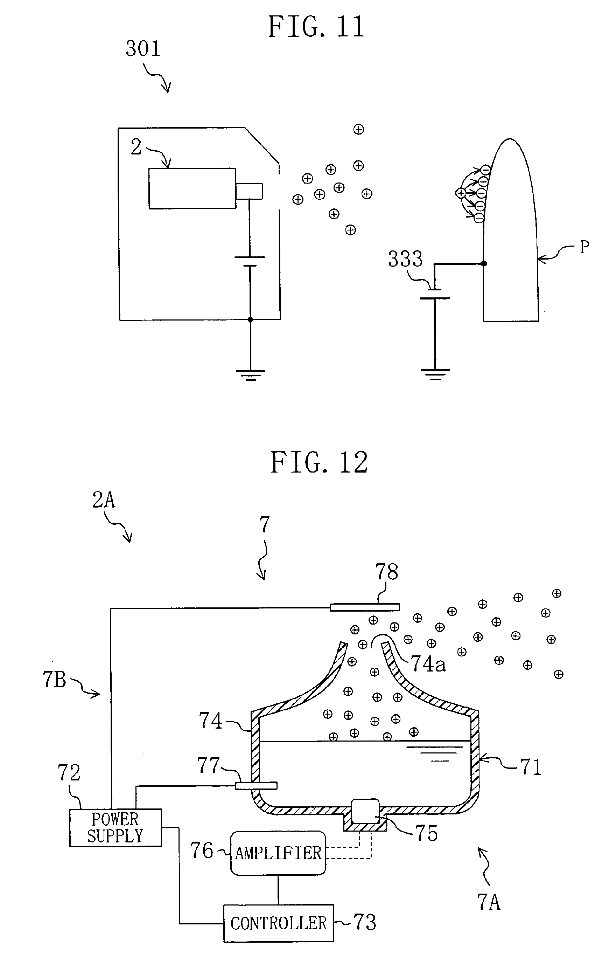

The operation of the electrostatic spraying device (2) of the third embodiment is the same as that of the electrostatic spraying device (2) of the first embodiment. That is, referring to FIG. 11, fine water droplets are discharged in an electrically positively charged state from the electrostatic spraying device (2) and then supplied to the room air.

On the other hand, the person (P) who is using the electrically charging desk (303) is placed in the electrically negatively charged state. As a result, airborne water droplets in the room air are attracted to the person (P) by coulomb force and are either adhered to the person (P), or absorbed by the person (P) through the person's mouth and nose. In the way as described above, the airborne water droplets in the room air are efficiently adhered to or absorbed by the person (P).

### ADVANTAGEOUS EFFECTS OF THE THIRD EMBODIMENT

Therefore, in accordance with the third embodiment, the electrostatic spraying device (2) electrically charges the water held in the solution tank (40) and discharges it in atomized form and the person (P) is electrically charged to a potential opposite to that of the electrically charged water droplets by the electrically charging desk (303), whereby the water droplets are actively absorbed by or adhered to the person (P) by the action of coulomb force. As a result, the amount of water droplets that is delivered to the object (P) can be increased relative to the amount of water droplets that is supplied from the electrostatic spraying device (2), whereby the amount of electric power that is consumed by the humidification system (301) can be reduced.

In addition, since the coulomb force is stronger than the above-described electric image force, this enables the humidification system (301) to more efficiently deliver water droplets to the object (P) as compared to the first and second embodiments by electrically charging the object (P) to a potential opposite to that of the water droplets.

In addition, in the third embodiment, the water droplets supplied from the electrostatic spraying device (2) are electrically positively charged. However, it may be arranged such that the water droplets are electrically negatively charged. However, in that case, it is required that the electrically charging desk (303) be electrically positively charged.

In addition, in the third embodiment, the electrically charging desk (303) constitutes an object electrically charging means, which should, however, not be considered limitative. For example, it may be configured such that a negative voltage of predetermined level is applied to the chair (332). In addition, it may be arranged such that the person (P) as an object wears a strap to which voltage is applied so that the person (P) is placed in the electrically charged state. Alternatively, any electrically charging means may be employed as long as it is able to electrically charge the object (P) such as a person.

### FIRST MODIFICATION OF THE FIRST TO THIRD EMBODIMENTS

The following is a description of a first modification of the first to third embodiments. The first modification is similar to the first to third embodiments but differs therefrom in that an electrically charging and atomizing means of different configuration is employed.

More specifically, the first modification employs an electrically charging and atomizing device (2A) which is formed by an ultrasonic atomizing device (7).

Referring now to FIG. 12, the ultrasonic atomizing device (7) includes an ultrasonic atomizing part (7A), a polarizing part (7B) and a controller (73).

The ultrasonic atomizing part (7A) has a spray cartridge (71) and an amplifier (76).

The spray cartridge (71) includes a solution tank (74) and an oscillator (75).

The solution tank (74) is a hollow container having in its upper portion a spout (74a) and holds therein water for use as a spray liquid.

The oscillator (75) is arranged on the bottom of the solution tank (74) and connected to the amplifier (76). That is, when supplied with electric power from the amplifier (76), the oscillator (75) starts oscillating at frequencies of vibration in the ultrasonic band, whereby energy of ultrasonic vibration is supplied to the liquid held in the solution tank (74). As a result, the liquid in the solution tank (74) is supplied, in the form of fine droplets, into the air. In other words, spraying is conducted.

The controller (73) is connected to the amplifier (76). That is, the controller (73) provides control so that the supply of electric power is provided from the amplifier (76) to the oscillator (75) and spraying is conducted.

The polarizing part (7B) has a discharge electrode (77), a counter electrode (78) and an electric power supply (72) which is connected to the discharge electrode (77) and to the counter electrode (78).

The discharge electrode (77) is a rod-shaped electrode formed of electrically conductive material such as electrically conductive resin and is arranged in the solution tank (74). More specifically, the discharge electrode (77) is passed, in a lower portion of the solution tank (74), through the wall of the solution tank (74) so that it projects inwardly and outwardly relative to the solution tank (74).

The counter electrode (78) is a ring-shaped electrode which is formed of electrically conductive material such as metal and is located in the vicinity of the spout (74a) of the solution tank (74). The counter electrode (78) and the discharge electrode (77) are electrically isolated from each other.

The electric power supply (72) is a dc high voltage electric power supply. The positive terminal of the electric power supply (72) is electrically connected to a portion of the discharge electrode (77) that projects outwardly from the solution tank (74) while the negative terminal thereof is electrically connected to the counter electrode (78). The electric power supply (72) is electrically connected to the controller (73).

### OPERATION

The operation of the ultrasonic atomizing device (7) will be described.

As described above, upon the turning on of the amplifier (76) by the controller (73), the oscillator (75) of the spray cartridge (71) is supplied with electric power and starts vibrating, whereby the liquid in the solution tank (74) is supplied, in the form of fine droplets, into the air. At this time, the controller (73) places the electric power supply (72) in the on state, in other words, there is established a potential difference between the water in the solution tank (74) and the counter electrode (78). In this state, the water in the solution tank (74) is in a polarized state in which positive electric charges gather in the vicinity of the water surface. That is, the water in the solution tank (74) is vibrated by the oscillator (75) in such a polarized state, whereby the water is supplied, in the form of electrically positively charged droplets, into the air.

In the way as described above, the electrically charged water droplets are discharged into the room air by the ultrasonic atomizing device (7).

The water droplets thus supplied to the room air are efficiently adhered to or absorbed by the person (P) as an object by either electric image force (the first and second embodiments) or coulomb force (the third embodiment) acting on the electrically charged water droplets.

In accordance with the first modification, the atomization of water is carried out in the ultrasonic atomizing part (7A) while the electric charging of water is carried out in the polarizing part (7B), whereby the performance of atomization can be facilitated by the ultrasonic atomizing part (7A) while, on the other hand, the performance of electric charging can be facilitated by the polarizing part (7B). This makes it possible to provide more design freedom, thereby making it possible to enhance the entire performance of the ultrasonic atomizing device (7).

In addition, the employment of the ultrasonic atomizing part (7A) makes it possible to provide larger amounts of spray as compared to the electrostatic spraying.

Furthermore, the employment of the polarizing part (7B) makes it possible to easily realize the electrically charging and atomizing means as compared to the configuration that uses corona discharge (discussed later).

### SECOND MODIFICATION OF THE FIRST TO THIRD EMBODIMENTS

The following is a description of a second modification of the first to third embodiments. The second modification is similar to the first to third embodiments but differs therefrom in that an electrically charging and atomizing means of different configuration is employed.

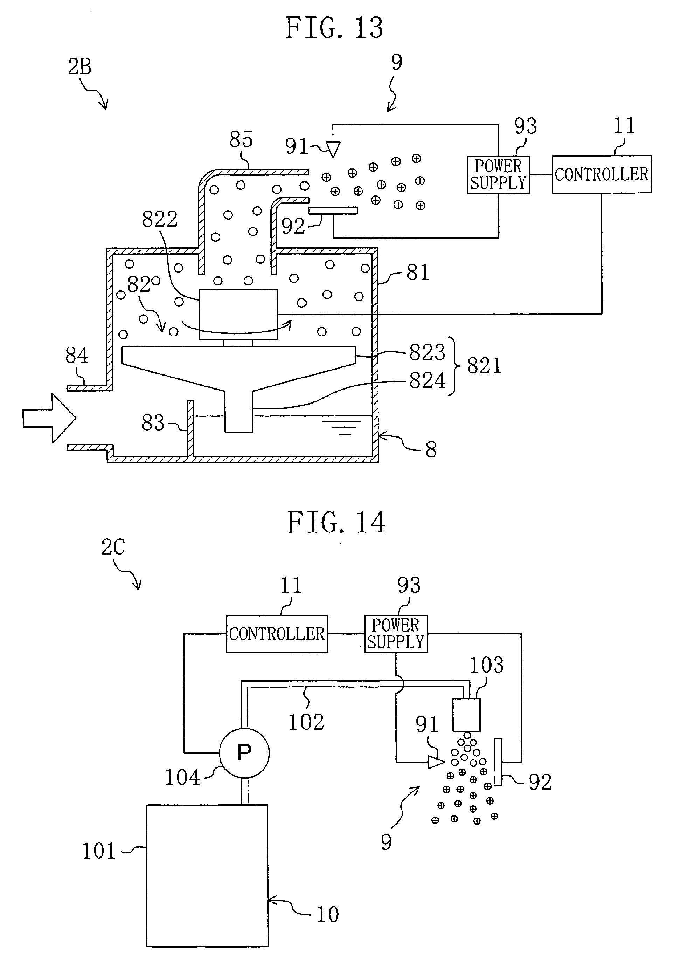

More specifically, an electrically charging and atomizing device (2B) of the second modification has a centrifugal spraying part (8), a corona discharging part (9) and a controller (11) for controlling the centrifugal spraying part (8) and the corona discharging part (9), as shown in FIG. 13.

The centrifugal spraying part (8) includes a housing (81) and a centrifugal part (82) mounted within the housing (81).

The housing (81) accommodates therein a tank part (83) for the storage of water for use as a spray liquid, an air introducing part (84) through which air is introduced into the housing (81) and an air ejecting part (85) through which air introduced into the housing (81) is ejected.

The centrifugal part (82) has a rotating disc (821) and a rotationally driving part (822) for rotationally driving the rotating disc (821). The rotating disc (821) has a rotating disc body member (823) and a suction pipe (824) extending downwardly from the center of rotation of the rotating disc body member (823) along the axis of rotation thereof. And the rotating disc (821) is supported in the housing (81) such that it is rendered rotatable, with the tip end of the suction pipe (824) dipped into the water in the tank part (83). In addition, the controller (11) is connected to the rotational driving part (822) and the rotational driving part (822) is controlled by the controller (11).

The corona discharging part (9) has a discharge electrode (91), a counter electrode (92) and an electric power supply (93) which is connected to the discharge electrode (91) and to the counter electrode (92).

The discharge electrode (91) and the counter electrode (92) are arranged such that they face each other across a jet of air ejected from the air ejecting part (85) in the vicinity of the exit of the air ejecting part (85) of the centrifugal spraying part (8).

The electric power supply (93), which is a dc high voltage electric power supply, has a positive terminal and a negative terminal the former of which is electrically connected to the discharge electrode (91) and the latter of which is electrically connected to the counter electrode (92). The controller (11) is connected to the electric power supply (93) and the electric power supply (93) is controlled by the controller (11). And upon the turning on of the electric power supply (93), there is applied between the discharge electrode (91) and the counter electrode (92) a high voltage, whereby a corona discharge is generated.

### OPERATION

The operation of the electrically charging and atomizing device (2B) of the second modification which is configured in the way as described above will be described.

By the controller (11), the rotational driving part (822) of the centrifugal spraying part (8) is operated and the electric power supply (93) of the corona discharging part (9) is turned on, and the electrically charging and atomizing device is placed in operation.

When the the rotational driving part (822) of the centrifugal spraying part (8) is activated, the rotating disc (821) starts rotating. As the rotating disc (821) rotates, the water in the tank part (83) is pumped up through the suction pipe (824) into the rotating disc body member (823) by the centrifugal force of the rotating disc (821). The water thus pumped up into the rotating disc body member (823) is formed into a thin film of water in the rotating disc body member (823) rotating at high speed, and changes to fine droplets. These fine water droplets are discharged into the air in the housing (81).

Meanwhile, air is introduced into the housing (81) from the air introducing part (84) by a pump or the like, and the water droplets atomized by the centrifugal part (82) are mixed with the air introduced from the air introducing part (84) to thereby produce humidified air. The humidified air is ejected from the air ejecting part (85) of the housing (81).

The corona discharging part (9) is arranged in the vicinity of the exit of the air ejecting part (85) and the humidified air ejected from the air ejecting part (85) passes through a discharge field generated between the discharge electrode (91) and the counter electrode (92) of the corona discharging part (9). At this time, the water droplets present in the humidified air become electrically charged.

In the way as described above, the electrically charged water droplets are supplied into the room air by the centrifugal spraying part (8) and the corona discharging part (9).

The water droplets thus supplied to the room air are efficiently adhered to or absorbed by the person (P) as an object by either electric image force (the first and second embodiments) or coulomb force (the third embodiment) acting on the electrically charged water droplets.

In accordance with the second modification, the atomization of water is carried out in the centrifugal spraying part (8) while the electric charging of water is carried out in the corona discharging part (9), whereby the performance of atomization can be facilitated by the centrifugal spraying part (8) while, on the other hand, the performance of electric charging can be facilitated by the corona discharging part (9). This makes it possible to provide more design freedom, thereby making it possible to enhance the entire performance of the entire electrically charging and atomizing device (2B).

In addition, the employment of the centrifugal spraying part (8) makes it possible to provide larger amounts of spray as compared to the electrostatic spraying.

### THIRD MODIFICATION OF THE FIRST TO THIRD EMBODIMENTS

The following is a description of a third modification of the first to third embodiments. The third modification is similar to the first to third embodiments but differs therefrom in that an electrically charging and atomizing means of different configuration is employed.

More specifically, an electrically charging and atomizing device (2C) according to the third modification includes an atomizing part (10) of the spray type, a corona discharging part (9) and a controller (11) for controlling the spray-type atomizing part (10) and the corona discharging part (9), as shown in FIG. 14. It should be noted that the electrically charging and atomizing device (2C) according to the third modification differs in the method of spraying from the electrically charging and atomizing device (2B) of the second modification. Therefore, the description will be made mainly on the configuration of the spray-type atomizing part (10), and as to structural features of the third modification corresponding to those of the second modification, the same reference numerals will be used and their description is omitted here.

The spray-type atomizing part (10) includes a solution tank (101) for the storage of water for use as a liquid to be sprayed, a suction pipe (102) extending from the solution tank (101), a nozzle (103) mounted at the tip end of the suction pipe (102) and a pump (104), disposed in the middle of the suction pipe (102), for pumping up water in the solution tank (101) and then forcing it to the nozzle (103). The controller (11) is connected to the pump (104) and the pump (104) is controlled by the controller (11).

In addition, in the corona discharging part (9), the discharge electrode (91) and the counter electrode (92) are arranged such that they face each other across a flow of water droplets sprayed from the nozzle (103) in the vicinity of the nozzle (103). The controller (11) is connected to the electric power supply (93) of the corona discharging part (9) and the electric power supply (93) is controlled by the controller (11).

### OPERATION

The operation of the electrically charging and atomizing device (2C) of the third modification which is configured in the way as described above will be described.

By the controller (11), the pump (104) of the spray-type atomizing part (10) is activated and, in addition, the electric power supply (93) of the corona discharging part (9) is turned on, whereby the electrically charging and atomizing device (2C) is placed in operation.

When the pump (104) is activated, the water in the solution tank (101) is pumped up, through the suction pipe (102), to the nozzle (103) and is sprayed from the nozzle (103) into the air in the form of fine droplets.

On the other hand, the corona discharging part (9) is arranged in the vicinity of the nozzle (103) and the water droplets sprayed from the nozzle (103) pass through a discharge field generated between the discharge electrode (91) and the counter electrode (92) of the corona discharging part (9). At this time, the water droplets become electrically charged.

In the way as described above, the electrically charged water droplets are supplied into the room air by the spray-type atomizing part (10) and the corona discharging part (9).

The water droplets thus supplied to the room air are efficiently adhered to, or absorbed by the person (P) as an object by either electric image force (the first and second embodiments) or coulomb force (the third embodiment) acting on the electrically charged water droplets.

In accordance with the third modification, the atomization of water is carried out in the spray-type atomizing part (10) while the electric charging of water is carried out in the corona discharging part (9), whereby the performance of atomization can be facilitated by the spray-type atomizing part (10) while on the other hand the performance of electric charging can be facilitated by the corona discharging part (9). This provides more design freedom, thereby making it possible to enhance the entire performance of the electrically charging and atomizing device (2C).

In addition, the employment of the spray-type atomizing part (10) makes it possible to provide larger amounts of spray as compared to the electrostatic spraying.

### FOURTH MODIFICATION OF THE FIRST TO THIRD EMBODIMENTS

The following is a description of a fourth modification of the first to third embodiments. The fourth modification is similar to the first to third embodiments but differs therefrom in that an electrically charging and atomizing means of different configuration is employed.

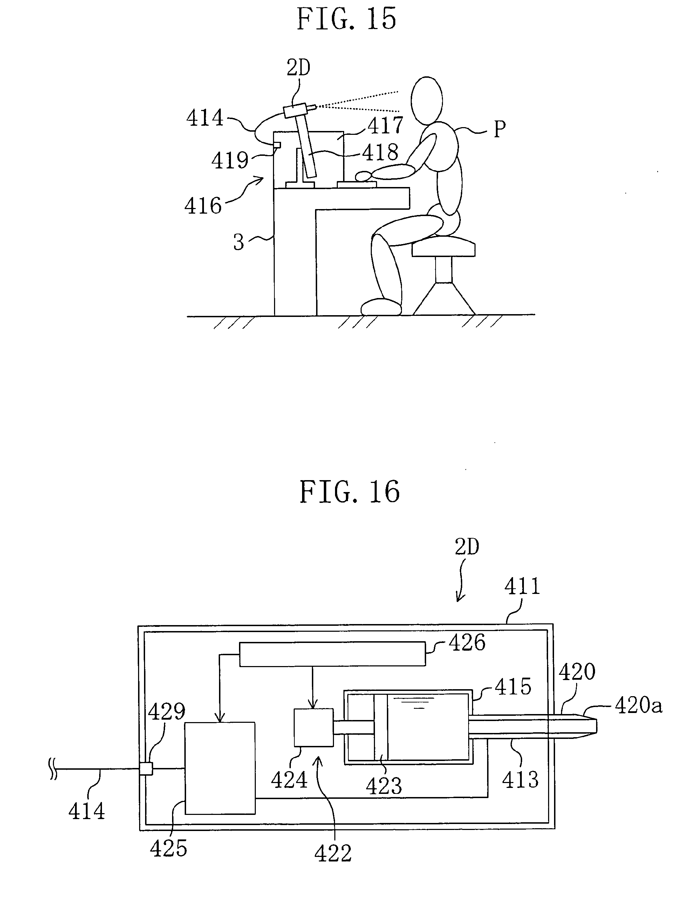

More specifically, an electrostatic spraying device (2D) according to the fourth modification is used in the state of being mounted onto a personal computer (416) placed on a desk (3), as shown in FIG. 15.

The electrostatic spraying device (2D) of the fourth modification includes a casing (411), a container part (415), a spraying nozzle (420), a liquid conveying part (422), an electric power supply connecting part (429), an electric power supply part (425) and an operation controlling part (426). The container part (415), the liquid conveying part (422), the electric power supply part (425) and the operation controlling part (426) are all accommodated in the casing (411). In addition, the spraying nozzle (420) is provided such that it projects from the front of the casing (411).

The container part (415) is for the storage of liquid to be sprayed. The container part (415) is shaped like a circular cylinder. A through hole for the connection of a connecting pipe (413) which is described later is formed in one end of the container part (415) while another through hole for the insertion of a rod of the liquid conveying part (422) which is described later is formed in the other end of the container part (415). The container part (415) holds water as a liquid to be sprayed.

The spraying nozzle (420) is a nozzle part for the spraying of liquid and is in the form of a circular pipe of stainless steel. More specifically, the spraying nozzle (420) is formed by a circular pipe having an inside diameter of 0.2 mm. The spraying nozzle (420) has a tip end part (420a) whose outside diameter is tapered towards the tip end. The outer circumferential surface of the tip end part (420a) is a circular conical surface whose vertex angle is 20 degrees. The spraying nozzle (420) is in fluid communication through the connecting pipe (413) with the inside of the container part (415). The spraying nozzle (420) constitutes a water discharging part and has a tip end opening which constitutes a discharging opening. Although the present embodiment employs only a single spraying nozzle (420), a plurality of spraying nozzles (420) may be employed.

The liquid conveying part (422) is a pump of the so-called syringe type. The liquid conveying part (422) includes a piston part (423) for the application of pressure to the inside of the container (415) and an electric motor part (424) for driving the piston part (423). The piston part (423) is shaped like a circular plate and mounted within the container part (415), with its outer circumferential surface in close contact with the inner circumferential surface of the container part (415). A portion of the container part (415) on the front side of the piston part (423) is filled with liquid. The rear of the piston part (423) is connected through a rod to the motor part (424).

In the liquid conveying part (422), the piston part (423) gradually moves forwards when the electric motor part (424) is activated. When the piston part (423) moves forwards, the liquid in the container part (415) is forced out to the spraying nozzle (420). The liquid conveying part (422) is configured such that it supplies, to the spraying nozzle (420), an amount of liquid of not less than 0.1 nor more than 1.5 µL per second (for example, 1.5 µL per second). The amount of liquid that is supplied from the liquid conveying part (422) to the spraying nozzle (420) corresponds to the amount of liquid that is sprayed from the spraying nozzle (420).

The electric power supply connecting part (429) is configured such that it is connectable to a USB cable (414). In addition, the electric power supply connecting part (429) is electrically connected to the electric power supply part (425). Upon the connection of the electric power supply connecting part (429) to a USB port (419) of the body (417) of the personal computer (416) via the USB cable (414), the supply of electric power is provided from the body (417) of the personal computer (416) to the electric power supply part (425).

The electric power supply part (425) is configured such that it provides the supply of electric power from the USB port (419) to the electric motor part (424) and to the operation controlling part (426). In addition, the electric power supply part (425) is configured such that the voltage of electric current (5 V) supplied from the USB port (419) is converted into a high level of voltage in the range of not less than 5 nor more than 11 kV (for example, 6 kV) for application to the spraying nozzle (420).

The operation controlling part (426) is a unit for controlling the operation of the electrostatic spraying device (2D). When the electric power supply of the electrostatic spraying device (2D) is turned on, the operation controlling part (426) provides control so that the electric motor part (424) of the liquid conveying part (422) is activated and, in addition, the electric power supply part (425) is instructed to apply voltage to the spraying nozzle (420).

### OPERATION

The operation of the electrostatic spraying device (2D) of the present embodiment will be described. The electrostatic spraying device (2D) is used such that it is mounted on a display (418) of the personal computer (416), as shown in FIG. 2. The USB cable (414), one end of which is connected to the USB port (419) of the body (417) of the personal computer (416), is connected to the electric power supply connecting part (429). In addition, the casing (411) is provided with a fastening part (not shown) which clips the upper side of the display (418) so that the casing (411) is firmly secured to the upper side of the display (418).

In this state, when the electric power supply of the electrostatic spraying device (2D) is turned on, the electric power supply part (425) applies voltage to the spraying nozzle (420) to thereby generate an electric field at the tip end part of the spraying nozzle (420) and the electric motor part (424) of the liquid conveying part (422) is driven. In the present embodiment, the spraying nozzle (420) and the electric power supply part (425) together constitute an electric field generating means.

When the electric motor part (424) is activated, the piston part (423) gradually moves forward in the container part (415), whereby the liquid in the container part (415) is forced out to the spraying nozzle (420). The spraying nozzle (420) is supplied with 1.5 µL of liquid per second. Since the electric field is generated at the tip end of the spraying nozzle (420), the liquid in the spraying nozzle (420) is polarized and + (plus) electric charges gather in the vicinity of a gas-liquid interface at the tip end of the spraying nozzle (420). As a result, at the tip end of the spraying nozzle (420), the gas-liquid interface is drawn out in the shape of a circular cone, and part of the water solution is torn apart from the top of the circular cone-shaped gas-liquid interface to thereby change to water droplets. The same amount of liquid as the amount supplied from the container part (415), i.e., 1.5 µL per second, is sprayed in liquid droplet form from the spraying nozzle (420).

With the magnitude of applied voltage and the electrical resistivity of liquid as employed in the present embodiment, the size of liquid droplets that are sprayed from the spraying nozzle (420) is roughly in the range of 50 to 200 µm. The liquid dispersed in liquid droplet form from the spraying nozzle (420) travels through the air to the person (P) located at distance of about 40 to about 60 cm from the tip end of the spraying nozzle (420).

The water droplets thus supplied to the room air are efficiently adhered to, or absorbed by the person (P) as an object by either electric image force (the first and second embodiments) or coulomb force (the third embodiment) acting on the electrically charged water droplets.

The electrostatic spraying device (2D) is not necessarily used, with being mounted onto the personal computer (416). For example, the electrostatic spraying device (2D) may used, with simply being placed on the desk (3). In this case, there is no need for the electric power supply connecting part (429) to be configured to be connectable with the USB cable (414), and it suffices if the electric power supply connecting part (429) is configured to be connectable with an electric power supply cable from a commercial power supply.

### OTHER EMBODIMENTS

With respect to the foregoing embodiments, the invention may be configured as follows.

That is, in each of the foregoing embodiments, the object is a person, which is however not considered limitative. The object may be other than the human being. In that case, it suffices if the object is connected to ground (as in the second embodiment) or electrically charged (as in the third embodiment) by any suitable means.

### INDUSTRIAL APPLICABILITY

As has been described above, the present invention, since it is able to efficiently provide water in atomized form to the object, finds its utility for humidification systems for providing atomized water to the object.

## Claims

1. A humidification system for delivering atomized water to an object (P), comprising:
electrically charging and atomizing means (2, 2A, 2B, 2C, 2D) for discharging water in an atomized and electrically charged state.

2. The humidification system of claim 1, further comprising:
object grounding means (203) for establishing connection of the object (P) to ground.

3. The humidification system of claim 1 for the delivering of atomized water to the object (P), further comprising:
object electrically charging means (303) for electrically charging the object (P) to a potential opposite to that of the water electrically charged by the electrically charging and atomizing means (2, 2A, 2B, 2C, 2D).

4. The humidification system of claim 1, wherein the electrically charging and atomizing means (2, 2D) is electrostatic spraying means (2, 2D), the electrostatic spraying means (2, 2D) including a water discharging part (51, 420) having a discharging opening (51a) through which water is discharged and electric field generating means (22, 50, 60, 420, 425) for generating an electric field in the vicinity of the discharging opening (51a);
wherein such an electric field is made to act on water present in the vicinity of the discharging opening (51a), whereby the water is electrically charged and atomized.

5. The humidification system of claim 1, wherein the electrically charging and atomizing means (2A, 2B, 2C) includes atomizing means (7A, 8, 10) for atomizing water and electrically charging means (7B, 9) for electrically charging water.

6. The humidification system of claim 5, wherein the electrically charging means (9) uses corona discharge to electrically charge the water atomized by the atomizing means (8, 10).

7. The humidification system of claim 5,
wherein the electrically charging means (7B) applies an electric field to water to thereby polarize the water, and
wherein the atomizing means (7A) atomizes the water polarized by the electrically charging means (7B).

8. The humidification system of claim 1, wherein the object (P) is a person.
